# EUROPEAN PATENT SPECIFICATION

(11) **EP 3 505 387 B1**
(45) Date of publication and mention of the grant of the patent: **01.05.2024**
(21) Application number: 17842942.9
(22) Date of filing: 23.08.2017
(51) Int. Cl.: B60L 53/30, H02J 9/00, B60L 50/60, B60L 58/12, B60L 55/00, B60L 53/80, B60L 53/53, H02J 7/00

(54) **COMPACT AND DISTRIBUTED STATION FOR CHARGING, BATTERY REPLACEMENT AND ENERGY STORAGE**
KOMPAKTE UND VERTEILTE BASISSTATION ZUM AUFLADEN, ERSETZEN EINER BATTERIE UND ENERGIESPEICHERN
POSTE COMPACT ET RÉPARTI POUR CHARGE, REMPLACEMENT DE BATTERIE ET STOCKAGE D'ÉNERGIE

(30) Priority: 25.08.2016 CN 201620946673 U
(43) Date of publication of application: 03.07.2019
(73) Proprietor: Nio Co., Ltd., Shanghai 201804 (CN)
(72) Inventor: ZHANG, Jianxing, Shanghai 201804 (CN); CHEN, Jiong, Shanghai 201804 (CN); XU, Honggang, Shanghai 201804 (CN); LAI, Jianwen, Shanghai 201804 (CN); ZHAO, Zhiling, Shanghai 201804 (CN)
(74) Representative: Vossius & Partner Patentanwälte Rechtsanwälte mbB
(86) International application number: PCT/CN2017/098659
(87) International publication number: WO 2018/036520

(56) References cited:
- EP-A2- 2 889 176
- CN-A- 101 951 008
- CN-A- 102 390 440
- CN-A- 102 832 662
- CN-A- 105 109 466
- CN-U- 202 978 395
- CN-U- 203 289 114
- CN-U- 205 970 910
- US-A1- 2008 068 782
- US-A1- 2010 060 016
- US-A1- 2012 299 531
- US-A1- 2015 328 999
- US-A1- 2016 036 097

## Description

### Technical Field

The invention relates to the field of electric vehicles and particularly provides a compact station for charging, battery swapping and energy storage.

### Background Art

With the increasing popularity of electric vehicles, fast charging stations and battery swap stations have also been widely applied and rapidly built. At present, there are mainly three kinds of electric vehicle power stations: fast charging stations, battery swap stations and energy storage stations. The fast charging station for electric vehicles can solve the problem of fast charging of batteries and reduce the charging time of vehicles, but it will shorten the service life of the battery, aggravate the power rush of the power grid and bring about other adverse effects. The battery swap station for electric vehicles can realize quick battery swap and relieve users' range anxiety, but there are problems such as a large construction area and high system costs. The energy storage station can realize grid power peak shaving and valley filling, improve the access capacity of new energy sources and delay the capacity expansion of urban power transmission and distribution system, however, there are some problems such as difficult construction and high costs.

US patent application US2010060016A1 disclosed a network of energy generating modules includes a plurality of energy generating modules positioned over a geographic area and a network monitoring station. The energy generating modules may include enclosures and energy-transfer receptacles. The enclosures are configured to maintain an energy generating device capable of generating an energy output, and the energy-transfer receptacles are configured to be coupled to the energy generating device and to transfer the energy outputs to energy consuming devices. The energy generating modules are communicably linked to a communications network. In other embodiments, the network of energy generating modules further includes a network monitoring station configured to communicate with the energy generating modules over the communications network to monitor one or more conditions of the energy generating modules.

US patent application US2012299531A1 disclosed a charging service vehicles and methods using modular batteries are disclosed. The service vehicles are vehicles having electric vehicle (EV) charging equipment, and removably mounted battery modules or battery module connection points. The battery modules are connected to the EV charging equipment as a source of electrical energy. Some embodiments disclose integrating the EV charging equipment with the vehicle, recharging modules through a distribution grid connection, the manner of discharging the batteries, modes of connecting and disconnecting the modules, the size and weight of the modules, quick-disconnectability of modules, control and monitoring of the modules and charging equipment, and/or ways of connecting modules to the vehicle. These features are beneficial to efficiently keep service vehicles available for EV charging through exchanging battery modules or providing additional battery modules when necessary, and may keep operators safe through de-energization of connectors and other precautions inherent in these designs.

US patent application US2008068782A1 disclosed a mobile power system for producing power at a desired location includes a first power generating device of a first type coupled to a transportable housing, and a second power generating device of a second type coupled to the transportable housing. The first type of power generating device is different than the second type of power generating device. According to an exemplary embodiment, the mobile power system may provide easy access to different types of power outputs. Further, the housing may have the approximate size of a standard freight container.

US patent application US2016036097A1 disclosed a device for storage of electrical energy of high capacity (MEESD) using batteries (1) of electric vehicles (EVB) connected by power electronics devices (2), allowing the connection of individual batteries present in the necessary configurations. The mechanical conception of MEESD allows the safe transportation of the fully charged BVEs, from charging location to the place of their use. The Management and Control System (MCS) from MEESD, establishes EVBs connections settings in order to allow the connection to any kind of electrical power generation unit, namely Renewable Energy Sources (RES), without implying external transformation; also to raise the output of maximum current, it can set the necessary batteries in parallel, for example to supply energy to the simultaneous fast charging of several Electrical Vehicles (EV). MEESD makes possible transportation of electrical energy produced by RES, to, for example, facilities that provide fast charging of EVs without usage of the existing distribution grid.

European patent application EP2889176A2 disclosed a battery exchange station and a method of operating the battery exchange station are provided which can solve conventional problems, such as the unavailability of electricity stored in a battery, the difficulties in coping with changes in system operation, and the difficulties in utilizing renewable energy. The battery exchange station and the method of operating the battery exchange station allow for utilization of electricity stored in a battery and improve a system's operation and electricity demand conditions by charging a large-capacity battery with electricity coming from the system and providing the electricity stored in the large-capacity battery to the system.

China patent application CN102390440A disclosed a movable automatic power charging and switching station for an electric automobile. The movable automatic power charging and switching station comprises a drawing automobile head, a semitrailer, and units, such as a cell storage cabin, a cell box, an automatic power switching device, an automatic charging and control system and the like which are mounted on the semitrailer. The cell storage cabin is a motor roller way cabin and can be used for storing a plurality of cell boxes; the cell boxes are standard exchange modules and connected with a cell cabin at the lower part of an automobile body by using a plurality of spring quick-open hooks; and the automatic power switching device comprises an electric motor roller, a removing apparatus for lines, a lifting platform and a plurality of unlocking/locking push rod mechanisms. The cell boxes are locked or unlocked with the cell cabin of the automobile body through mutual working of the lifting platform, the unlocking/locking push rod mechanisms and the quick-open hooks so that the dismounting and replacement of the cell boxes are realized; and a charger can be used for automatically charging the cell boxes. The movable automatic power charging and switching station has the advantages of complete system, tight structure, flexible mechanism, small construction investment and short period. Furthermore, the movable automatic power charging and switching station not only can be individually operated but also can combined with a centralized charging station to form a power switching network so that the requirement of automatically replacing the cells of the electric automobile is met.

China patent application CN102390440A disclosed a mobile electric passenger car power battery replacement-based control method. The method comprises the steps that a mobile power station runs to the position where an electric passenger car in need of battery replacement is located after the mobile power station receives an instruction; a tail plate is unfolded and flatly arranged on the ground to form a platform, and an automatic telescopic slope plate is opened; a lifting device completes leveling after the electric passenger car is driven onto the platform of the tail plate and completes positioning operation; after a battery-replacing robot transfers a detached power-lack battery to a battery scheduling system, the battery scheduling system transfers the power-lack battery on the battery-replacing robot onto a power battery shelf system and transfers a full-power battery on the power battery shelf system onto the battery-replacing robot and the power-lack battery is locked by the power battery shelf system; the battery-replacing robot transfers the full-power battery moved by the battery scheduling system to a position below a chassis of the electric passenger car and installs the full-power battery at the bottom of the body. By adopting the mobile electric passenger car power battery replacement-based control method, the problem that the power batteries of electric passenger cars which cannot run to the power station cannot be replaced or vehicles cannot be maintained is solved.

However, none of the above cited references disclosed the station for charging, battery swapping and energy storage according to claim 1.

How to reduce the cost of the electric vehicle charging system, reduce the construction area of the charging system, meet the application needs of multi-stakeholders and improve operation efficiency of the system has become key problems that need to be solved urgently in the development process of this industry.

Accordingly, there is a need in the art for an electric vehicle charging station to solve the above problems.

### Summary of the Invention

In order to solve the above problems in the prior art, that is, to solve the problems of high costs, single function and a large construction area of the existing charging system, the invention provides a compact station for charging, battery swapping and energy storage according to claim 1.

In a preferred embodiment of the above compact station for charging, battery swapping and energy storage, the station is provided with at least two charging and discharging branch circuits independent from each other, and the monitoring system controls the charging and discharging of the charging and discharging branch circuits.

In a preferred embodiment of the above compact station for charging, battery swapping and energy storage, each of the charging and discharging branch circuits comprises one of the charging and discharging device and one of the quick-swap battery pack, the charging and discharging device being electrically connected to the quick-swap battery pack.

In a preferred embodiment of the above compact station for charging, battery swapping and energy storage, the charging and discharging device comprises a charging and discharging electric machine, which is used for converting alternating current of the power grid into direct current to charge the quick-swap battery pack, and/or for converting direct current output by the quick-swap battery pack into alternating current to discharge to the power grid.

In a preferred embodiment of the above compact station for charging, battery swapping and energy storage, the quick-swap battery pack comprises a plurality of energy storage batteries for replacing the battery to be swapped of the electric vehicle.

In a preferred embodiment of the above compact station for charging, battery swapping and energy storage, the station is further provided with a display device for displaying the number of the quick-swap battery pack, state of charge, and/or time and cost required for the battery of the electric vehicle to be fully charged.

Those skilled in the art can understand that in the preferred technical solution of the invention, the station for charging, battery swapping and energy storage integrates the battery swapping device, the charging and discharging device and the quick-swap battery pack in the container, so that the station has the functions of charging, discharging, battery swapping and energy storing at the same time, and effectively reduces the costs and construction area of the electric vehicle charging system. Specifically, the station for charging, battery swapping and energy storage is composed of a plurality of branch circuits, each branch circuit is composed of a single charging and discharging device connected to a single quick-swap battery pack and is controlled by the monitoring system. The station for charging, battery swapping and energy storage uses the valley power of the power grid to charge batteries at night, swaps batteries during the day and discharges to the power grid at the peak of the power grid, thus realizing the integrated application of various technical functions in one single facility, i.e. one single facility that systematically realizes the functions of charging, battery swapping and energy storing.

### Brief Description of the Drawings

Fig. 1 is a system topology block diagram of a station for charging, battery swapping and energy storage of the invention.
Fig. 2 is a schematic view of the design of the station for charging, battery swapping and energy storage not according to the invention and present for illustration purposes only.

### Detailed Description of Embodiments

Preferred embodiments of the invention are described below with reference to the accompanying drawings. It should be understood by those skilled in the art that these embodiments are only for explaining the technical principles of the invention and are not intended to limit the scope of protection of the invention.

**[0001]** It should be noted that in the description of the invention, the terms, such as "center", "upper", "lower", "left", "right", "vertical", "horizontal", "inner" and "outer", that indicate directions or positional relationships are based on the directions or positional relationships shown in the drawings only for convenience of description, and do not indicate or imply that the device or element must have a specific orientation, be constructed and operated in a specific orientation, and therefore cannot be understood as limitation to the invention. Moreover, the terms "first", "second" and "third" are used for descriptive purposes only and are not to be understood as indicating or implying relative importance.

**[0002]** In addition, it should also be noted that in the description of the invention, the terms "install", "interface" and "connect" are to be understood in a broad sense, for example, it can be a fixed connection, detachable connection, or integral connection; a mechanical connection or electrical connection; a direct connection or indirect connection through an intermediate medium, and internal communication between two elements, unless expressly specified and defined otherwise. For those skilled in the art, the specific meaning of the above terms in the invention can be interpreted according to the specific situation.

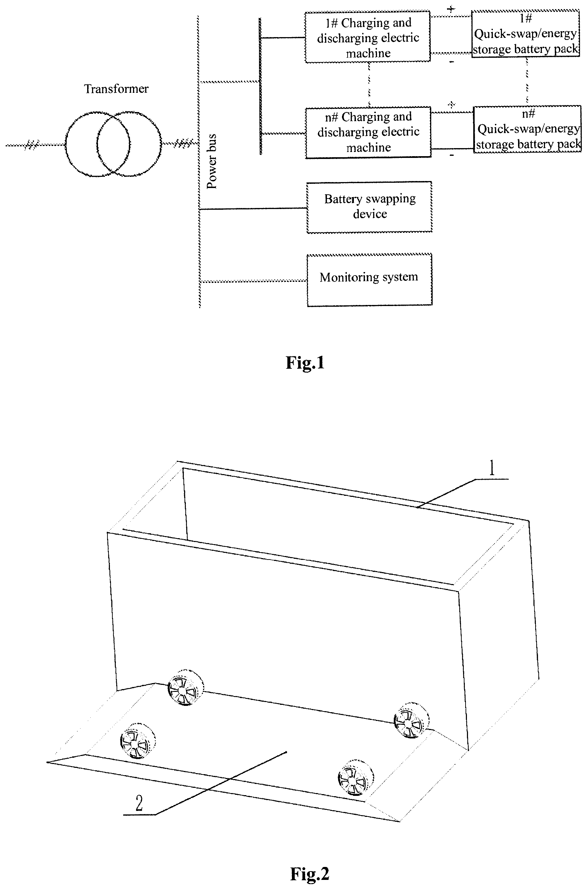

As shown in Figs. 1 and 2, a compact station for charging, battery swapping and energy storage comprises a container 1 and a battery swapping device, a quick-swap battery pack, a charging and discharging device, a monitoring system and a transformer contained in the container 1. It should be noted that in this application, the monitoring system refers to a system assembly composed of a selection of sensors and controllers. The sensors are used to monitor the overall operating condition of the station and the power consumption peaks and valleys of the power grid. The controllers are used to control the overall operation of the station, such as the replacement of the quick-swap battery pack by the battery swapping device and the charging and discharging of the charging and discharging device. In addition, the controllers may take any suitable form, such as a combinational logic controller or a programmable logic controller, as long as it can control the operation of the station according to the monitoring data from the sensors.

As shown in Fig. 1, a left end of the transformer (the left end of the transformer shown in the figure) is connected to the power grid, a right end of the transformer (the right end of the transformer shown in the figure) is connected to a power bus, and the transformer transforms the voltage of the power grid into the voltage required by the station. The power bus is electrically connected to the battery swapping device, the monitoring system and the charging and discharging device, respectively. The charging and discharging device comprises a plurality of (at least two) charging and discharging electric machines, each of which is electrically connected to a quick-swap battery pack to form a branch circuit, and each branch circuit is independent of each other and does not affect each other.

The battery swapping device is used to replace a battery to be swapped of the electric vehicle with the quick-swap battery pack. The charging and discharging electric machine is used to convert the alternating current of the power bus into direct current and provide electric energy for the quick-swap battery pack. Moreover, the charging and discharging electric machine can also convert the electric energy of the quick-swap battery pack from direct current output to alternating current output, and then via the power bus, the voltage of the power bus can be transformed into the voltage of the power grid through the transformer to discharge to the power grid. It will be understood by those skilled in the art that the charging and discharging electric machines can charge the quick-swap battery pack or discharge to the power grid separately, or multiple charging and discharging electric machines can charge the quick-swap battery pack or discharge to the power grid simultaneously.

The quick-swap battery pack is composed of a plurality of energy storage batteries for storing electric energy and replacing the battery to be swapped of the electric vehicle. Those skilled in the art can understand that the battery pack can be provided in two types: a quick-swap battery pack and an energy storage battery pack. The quick-swap battery pack is used for replacement of the battery to be swapped of the electric vehicle after being fully charged, and the energy storage battery pack is used for storing electric energy and discharging to the power grid.

The monitoring system also establishes a communication connection with each quick-swap battery pack for monitoring the electric energy stored in the quick-swap battery. In addition, the monitoring system monitors the voltage of the power bus and further obtain the voltage of the power grid through the transformation ratio between the power bus power supply and the transformer.

The monitoring system is also electrically connected to the charging and discharging electric machine, the battery swapping device and the battery pack, respectively, and is used for controlling the charging and discharging of the charging and discharging electric machine, controlling the battery swapping device to replace the battery of the electric vehicle, and receiving and processing collected information to further control the charging and discharging electric machine.

Furthermore, the station is also provided with a display device (not shown) for displaying the number of the quick-swap battery pack, state of charge, and time and cost required for the battery of the electric vehicle to be fully charged, so that a driver can learn about the condition of the quick-swap battery pack or the battery of the electric vehicle. Those skilled in the art can understand that the display device can be provided with an additional function of displaying the real-time voltage of the power grid, or those skilled in the art can also add other display functions or delete corresponding display functions as appropriate.

As shown in Fig. 2, a compact and distributed station for charging, battery swapping and energy storage is also provided with a vehicle battery quick-swap section 2 for parking the electric vehicle with a battery to be charged or swapped. The vehicle battery quick-swap section 2 is located on the left of the container 1 (the left side of the container shown in the figure) and is close to the container 1, which is not according to the invention and is present for illustration purposes only. In the invention, the vehicle battery quick-swap section 2 is arranged inside the container 1 so as to occupy a smaller construction area.

With continued reference to Fig. 2, the battery swapping device, the quick-swap battery pack, the charging and discharging device, the monitoring system and the transformer are compactly installed in the container 1. The battery swapping device is arranged at an inner bottom portion of the container 1. The charging and discharging device and the quick-swap battery pack are three-dimensionally arranged in multiple tiers within the container 1 (e.g., stored in racks). The monitoring system is installed in the remaining space in the container 1. The display device is arranged on a side wall of the container 1 for easy observation.

Combined with the compact station for charging, battery swapping and energy storage shown in Figs. 1 and 2, the station not only has a compact structure and requires a small construction area, but also has the functions of charging, discharging, battery swapping and energy storing. Specifically, the station can charge the quick-swap battery pack via the charging and discharging electric machine during the valley period of the power grid at night. During the day, the fully charged quick-swap battery pack is used to replace the battery to be swapped of the electric vehicle, or is discharged to the power grid via the charging and discharging electric machine during the power consumption peak of the power grid. It will be understood by those skilled in the art that power consumption peaks and valleys of the power grid can be set according to the time in a day, for example, the power consumption peak is from 9:00 to 18:00 and the power consumption valley is from 18:00 to 9:00 the next day. Power consumption peaks and valleys of the power grid can also be determined by the change in power grid voltage monitored by the monitoring system. Specifically, a threshold value is set for the grid voltage, such that a power consumption peak is detected when the grid voltage is lower than the threshold value and a power consumption valley is detected when the grid voltage is higher than the threshold value.

## Claims

1. A compact station for charging, battery swapping and energy storage, comprising:
a battery swapping device configured to replace a battery for an electric vehicle;
a quick-swap battery pack for storing electric energy;
a charging and discharging device configured to charge the quick-swap battery pack by a power grid and discharging the quick-swap battery pack to the power grid; and
a monitoring system configured to communicate with the battery swapping device, the quick-swap battery pack and the charging and discharging device, monitor an overall operating condition of the station and power consumption peaks and valleys of the power grid, and control the battery swapping device to replace the quick-swap battery pack and control the charging or discharging of the charging and discharging device, wherein the station is further provided with a transformer configured to transform a voltage of the power grid into a voltage required by the station, the monitoring system monitors a voltage of power bus for obtaining the voltage of the power grid through a transformation ratio between the power bus power supply and the transformer;
wherein the station further comprises a container (1), with the battery swapping device, the charging and discharging device, the quick-swap battery pack and the monitoring system all arranged in the container, in which the battery swapping device is installed at an inner bottom portion of the container (1), the charging and discharging device and the quick-swap battery pack are three-dimensionally arranged in multiple tiers within the container (1), and the monitoring system and the transformer are installed in the remaining space in the container (1),
wherein the station is provided with a vehicle battery quick-swap section (2) which is arranged in the container (1).

2. The compact station for charging, battery swapping and energy storage according to claim 1, wherein the station is provided with at least two charging and discharging branch circuits independent from each other, and the monitoring system controls the charging and discharging of the charging and discharging branch circuits.

3. The compact station for charging, battery swapping and energy storage according to claim 2, wherein each of the charging and discharging branch circuits comprises one of the charging and discharging device and one of the quick-swap battery pack, the charging and discharging device being electrically connected to the quick-swap battery pack.

4. The compact station for charging, battery swapping and energy storage according to claim 3, wherein the charging and discharging device comprises a charging and discharging electric machine configured to convert alternating current of the power grid into direct current to charge the quick-swap battery pack, and/or convert direct current output by the quick-swap battery pack into alternating current to discharge to the power grid.

5. The compact station for charging, battery swapping and energy storage according to claim 4, wherein the quick-swap battery pack comprises a plurality of energy storage batteries for replacing the battery to be swapped of the electric vehicle.

6. The compact station for charging, battery swapping and energy storage according to claim 1, wherein the station is further provided with a display device configured to display the number of the quick-swap battery pack, state of charge, and/or time and cost required for the battery of the electric vehicle to be fully charged.

## Patentansprüche

1. Kompaktstation zum Aufladen, Batteriewechseln und Energiespeichern, aufweisend:
eine Batteriewechselvorrichtung, die dazu ausgelegt ist, eine Batterie für ein Elektrofahrzeug zu ersetzen;
ein Schnellwechsel-Batteriepack zum Speichern elektrischer Energie;
eine Auflade- und Entladevorrichtung, die dazu ausgelegt ist, das Schnellwechsel-Batteriepack durch ein Stromnetz aufzuladen und das Schnellwechsel-Batteriepack an das Stromnetz zu entladen; und
ein Überwachungssystem, das dazu ausgelegt ist, mit der Batteriewechselvorrichtung, dem Schnellwechsel-Batteriepack und der Auflade- und Entladevorrichtung zu kommunizieren, einen Gesamtbetriebszustand der Station und Stromverbrauchsspitzen und -tiefpunkte des Stromnetzes zu überwachen und die Batteriewechselvorrichtung zu steuern, um das Schnellwechsel-Batteriepack zu ersetzen und das Aufladen oder Entladen der Auflade- und Entladevorrichtung zu steuern, wobei die Station ferner mit einem Transformator versehen ist, der dazu ausgelegt ist, eine Spannung des Stromnetzes in eine durch die Station benötigte Spannung zu transformieren, wobei das Überwachungssystem eine Spannung des Strombusses überwacht, um die Spannung des Stromnetzes über ein Transformationsverhältnis zwischen der Strombus-Stromversorgung und dem Transformator zu erhalten;
wobei die Station ferner einen Behälter (1) aufweist, wobei die Batteriewechselvorrichtung, die Auflade- und Entladevorrichtung, das Schnellwechsel-Batteriepack und das Überwachungssystem alle in dem Behälter angeordnet sind, wobei die Batteriewechselvorrichtung an einem inneren unteren Abschnitt des Behälters (1) installiert ist, die Auflade- und Entladevorrichtung und das Schnellwechsel-Batteriepack dreidimensional in mehreren Etagen innerhalb des Behälters (1) angeordnet sind und das Überwachungssystem und der Transformator in dem restlichen Raum in dem Behälter (1) installiert sind,
wobei die Station mit einem Fahrzeugbatterie-Schnellwechselabschnitt (2) versehen ist, der in dem Behälter (1) angeordnet ist.

2. Kompaktstation zum Aufladen, Batteriewechseln und Energiespeichern nach Anspruch 1, wobei die Station mit mindestens zwei voneinander unabhängigen Auflade- und Entladezweigschaltungen versehen ist und das Überwachungssystem das Aufladen und Entladen der Auflade- und Entladezweigstromkreise steuert.

3. Kompaktstation zum Aufladen, Batteriewechseln und Energiespeichern nach Anspruch 2, wobei jeder der Auflade- und Entladezweigstromkreise eine der Auflade- und Entladevorrichtungen und einen der Schnellwechsel-Batteriepacks aufweist, wobei die Auflade- und Entladevorrichtung elektrisch mit dem Schnellwechsel-Batteriepack verbunden ist.

4. Kompaktstation zum Aufladen, Batteriewechseln und Energiespeichern nach Anspruch 3, wobei die Auflade- und Entladevorrichtung eine elektrische Auflade- und Entlademaschine aufweist, die dazu ausgelegt ist, Wechselstrom des Stromnetzes in Gleichstrom umzuwandeln, um das Schnellwechsel-Batteriepack aufzuladen, und/oder durch das Schnellwechsel-Batteriepack abgegebenen Gleichstrom in Wechselstrom umzuwandeln, um ihn in das Stromnetz zu entladen.

5. Kompaktstation zum Aufladen, Batteriewechseln und Energiespeichern nach Anspruch 4, wobei das Schnellwechsel-Batteriepack eine Vielzahl von Energiespeicherbatterien zum Ersetzen der zu wechselnden Batterie des Elektrofahrzeugs aufweist.

6. Kompaktstation zum Aufladen, Batteriewechseln und Energiespeichern nach Anspruch 1, wobei die Station ferner mit einer Anzeigevorrichtung versehen ist, die dazu ausgelegt ist, die Anzahl der Schnellwechsel-Batteriepacks, den Ladezustand und/oder die Zeit und die Kosten anzuzeigen, die erforderlich sind, um die Batterie des Elektrofahrzeugs vollständig aufzuladen.

## Revendications

1. Station compacte pour recharge, changement de batterie, et stockage d'énergie, comprenant :
un dispositif de changement de batterie configuré pour remplacer une batterie pour un véhicule électrique ;
un bloc batterie à changement rapide pour stocker de l'énergie électrique ;
un dispositif de recharge et de décharge configuré pour recharger le bloc batterie à changement rapide par le biais d'un réseau électrique et décharger le bloc batterie à changement rapide dans le réseau électrique ; et
un système de surveillance configuré pour communiquer avec le dispositif de changement de batterie, le bloc batterie à changement rapide et le dispositif de recharge et de décharge, surveiller une condition de fonctionnement générale de la station et des pics et des creux de consommation d'électricité du réseau électrique, et commander le dispositif de changement de batterie pour remplacer le bloc batterie à changement rapide et commander la recharge ou la décharge du dispositif de recharge et de décharge, dans laquelle la station est en outre pourvu d'un transformateur configuré pour transformer une tension du réseau électrique en une tension requise par la station, le système de surveillance surveille une tension de bus électrique pour obtenir la tension du réseau électrique par le biais d'un rapport de transformation entre l'alimentation électrique de bus électrique et le transformateur ;
dans laquelle la station comprend en outre un conteneur (1), avec le dispositif de changement de batterie, le dispositif de recharge et de décharge, le bloc batterie à changement rapide et le système de surveillance tous agencés dans le conteneur, dans laquelle le dispositif de changement de batterie est installé dans une partie inférieure intérieure du conteneur (1), le dispositif de recharge et de décharge et le bloc batterie à changement rapide sont agencés tridimensionnellement en multiples étages à l'intérieur du conteneur (1), et le système de surveillance et le transformateur sont installés dans l'espace restant dans le conteneur (1),
dans laquelle la station est pourvue d'une section de changement rapide de batterie de véhicule (2) qui est agencée dans le conteneur (1).

2. Station compacte pour recharge, changement de batterie, et stockage d'énergie selon la revendication 1, dans laquelle la station est pourvue d'au moins deux circuits de dérivation de recharge et de décharge indépendants l'un de l'autre, et le système de surveillance commande la recharge et la décharge des circuits de dérivation de recharge et de décharge.

3. Station compacte pour recharge, changement de batterie, et stockage d'énergie selon la revendication 2, dans laquelle chacun des circuits de dérivation de recharge et de décharge comprend un du dispositif de recharge et de décharge et un du bloc batterie à changement rapide, le dispositif de recharge et de décharge étant électriquement connecté au bloc batterie à changement rapide.

4. Station compacte pour recharge, changement de batterie, et stockage d'énergie selon la revendication 3, dans laquelle le dispositif de recharge et de décharge comprend une machine électrique de recharge et de décharge configurée pour convertir un courant alternatif du réseau électrique en courant continu pour recharger le bloc batterie à changement rapide, et/ou convertir un courant continu, produit en sortie par le bloc batterie à changement rapide, en courant alternatif, pour la décharge dans le réseau électrique.

5. Station compacte pour recharge, changement de batterie, et stockage d'énergie selon la revendication 4, dans laquelle le bloc batterie à changement rapide comprend une pluralité de batteries de stockage d'énergie pour remplacer la batterie destinée à être changée du véhicule électrique.

6. Station compacte pour recharge, changement de batterie, et stockage d'énergie selon la revendication 1, dans laquelle la station est en outre pourvue d'un dispositif d'affichage configuré pour afficher le numéro du bloc batterie à changement rapide, l'état de charge, et/ou le temps et le coût requis pour que la batterie du véhicule électrique soit complètement rechargée.
